# EUROPEAN PATENT SPECIFICATION

(11) **EP 3 434 829 B1**
(45) Date of publication and mention of the grant of the patent: **06.01.2021**
(21) Application number: 16895500.3
(22) Date of filing: 01.11.2016
(51) Int. Cl.: E02F 9/16, B60R 7/04, B62D 33/06, E02F 3/32, E02F 9/00, E02F 9/08

(54) **COMPACT HYDRAULIC EXCAVATOR**
KOMPAKTER HYDRAULIKBAGGER
EXCAVATEUR HYDRAULIQUE COMPACT

(30) Priority: 25.03.2016 JP 2016061716
(43) Date of publication of application: 30.01.2019
(73) Proprietor: Hitachi Construction Machinery Tierra Co., Ltd., Koka-shi, Shiga 528-0061 (JP)
(72) Inventor: HASHIMOTO, Yuki, Koka-shi Shiga 528-0061 (JP); SUMINO, Tetsuya, Koka-shi Shiga 528-0061 (JP); ASHIDA, Tomoaki, Koka-shi Shiga 528-0061 (JP); TABETA, Hiroshi, Koka-shi Shiga 528-0061 (JP); KAWAMOTO, Junya, Koka-shi Shiga 528-0061 (JP)
(74) Representative: Manitz Finsterwald Patent- und Rechtsanwaltspartnerschaft mbB
(86) International application number: PCT/JP2016/082455
(87) International publication number: WO 2017/163477

(56) References cited:
- EP-A1- 1 674 380
- JP-A- 2004 074 884
- JP-A- 2005 231 614
- JP-A- 2005 231 614
- JP-A- 2006 335 201
- JP-A- 2007 022 393
- JP-A- 2007 063 777
- JP-A- 2007 063 777

## Description

### TECHNICAL FIELD

The present invention relates to a small-sized hydraulic excavator in which a seat is arranged in an upper side of a prime mover, particularly, to a small-sized hydraulic excavator including an accommodating box that accommodates equipment such as a tool.

### BACKGROUND ART

Generally, a hydraulic excavator that is a typical example of a construction machine, is configured so as to include: a lower traveling structure that can self-travel; an upper revolving structure rotatably equipped on the lower traveling structure; and a front device tiltably provided in a front side of the upper revolving structure. The upper revolving structure has a revolving frame forming a support structure. The revolving frame is provided with on-board equipment such as a prime mover, a hydraulic pump, a heat exchanger, a fuel tank, and a hydraulic oil tank.

Here, an accommodating box for accommodating equipment is provided in the hydraulic excavator. For example, tools such as a grease gun for greasing work, and a wrench, components such as a bolt, and documents such as an instruction manual are accommodated in the accommodating box. The accommodating box is arranged in a portion not disturbing the various pieces of on-board equipment equipped in the revolving frame, for example, in a front side of a bracket for mounting a boom cylinder provided in a front side of the revolving frame (right lateral side of a cab), or the like (Patent Document 1).

### PRIOR ART PATENT DOCUMENT

Patent Document 1: Japanese Patent Laid-Open No. 2013-122153 A

JP 2007 063 777 A teaches a small sized-hydraulic excavator in accordance with the preamble of claim 1.

### SUMMARY OF THE INVENTION

Incidentally, the hydraulic excavator according to the conventional art described above exemplifies a hydraulic excavator of medium sized class, in which an engine is equipped in a rear side of a revolving frame, and a cab is arranged in a front side of the engine.

In contrast, among hydraulic excavators of small-sized class called a mini excavator having a machine weight of about 0.7 to 8 tons, an ultra small-sized hydraulic excavator having the machine weight of 2 tons or smaller is used for dismantling work in an inside of a building (indoor work), and the like. Therefore, the vehicle width of the lower traveling structure and the upper revolving structure in the ultra small-sized hydraulic excavator are limited to a sized capable of passing an entrance of a building.

On the other hand, in a cold district, there is high demand for a hydraulic excavator of a cab type including a cab in which an operating room is defined. In this case, when a cab is provided in an ultra small-sized hydraulic excavator applied to an indoor work, the almost entire upper side of a revolving frame is covered by the cab. Accordingly, there is a problem that it is difficult to secure space in which an accommodating box is arranged on the revolving frame, in the ultra small-sized hydraulic excavator of the cab type.

In view of the above-discussed problems with the conventional art, it is an object of the present invention to provide a small-sized hydraulic excavator in which space in a cab is utilized effectively to provide an accommodating box.
This object is satisfied by a small-sized hydraulic excavator in accordance with claim 1.

In order to solve the problem described above, the present invention is applied to a small-sized hydraulic excavator comprising: a lower traveling structure that can self-propel; an upper revolving structure rotatably equipped on the lower traveling structure; and a front device tiltably provided in a front side of a front and rear direction of the upper revolving structure, the upper revolving structure comprising: a revolving frame forming a support structure; a counterweight mounted to a rear portion of the revolving frame for balancing weights with the front device; a prime mover equipped in a horizontally-placed state of being positioned in a front side of the counterweight, and extending in a left and right direction in a rear side of the revolving frame, to drive a hydraulic pump; a support member formed of leg parts provided on the revolving frame so as to extend over the prime mover, and a support base provided in upper ends of the leg parts; a partition member formed of a plate shape body including a front surface plate part that covers a front side of the prime mover and an upper surface plate part that covers an upper side of the prime mover, the front surface plate part being mounted to the revolving frame, the upper surface plate part being mounted to the support base of the support member, and the partition member partitioning a prime mover room in which the prime mover is arranged and a front side of the prime mover room; a platform member that is positioned in a front side of the partition member, is provided in between the revolving frame and the front surface plate part of the partition member, and is mounted with a seat; a footrest member that is positioned in a front side of the platform member is provided in the revolving frame, and on which a foot of an operator is placed; and a cab of which a front end is supported to a front side of the revolving frame and a rear end is supported to the support base of the support member, the cab covering an upper side of the partition member, platform member, and footrest member to define an operating room being a habitation room of the operator in the inside of the cab.

Further, a configuration adopted by the present invention is characterized in that a rear mounting member mounted to the support base of the support member is provided in a lower side of a rear end of the cab; and an accommodating box that is positioned in a rear side of the seat in the cab and accommodates equipment is provided in the rear mounting member of the cab. The accommodating box includes a main body with tool and document accommodating parts and a lid body with a notch.

According to the present invention, the accommodating box can be mounted to the rear mounting member of the cab even in a small-sized hydraulic excavator in which an upper side of the partition member, the platform member, and the footrest member provided on the revolving frame, that is, the almost entire upper side of the revolving frame is covered by the cab. Thereby, the accommodating box can be arranged in the cab by utilizing space formed in a rear side of the seat. Moreover, the accommodating box is arranged in dead space formed in the rear side of the seat in the cab. As a result, working space and working visibility of an operator in the cab is not decreased by the accommodating box, and the working space and working visibility of an operator can be maintained properly.

### BRIEF DESCRIPTION OF THE DRAWINGS

- Fig. 1 is a front view showing a small-sized hydraulic excavator according to the embodiment of the present invention.
- Fig. 2 is an exploded perspective view showing a state where a cab is separated from the small-sized hydraulic excavator, in which a front device is not shown.
- Fig. 3 is a cross sectional view viewing an inside of the cab from arrow III-III direction in Fig. 1 .
- Fig. 4 is a front view showing a state where an exterior cover of an upper revolving structure is removed, with a part of the cab broken.
- Fig. 5 is a perspective view showing the upper revolving structure, in which a counterweight, the exterior cover, and the cab are not shown.
- Fig. 6 is an exploded perspective view showing a state where a platform member is mounted to a revolving frame mounted with a support member, a fuel tank, and a hydraulic oil tank.
- Fig. 7 is a perspective view showing the revolving frame, the platform member, a partition member, a rear mounting member of the cab, an accommodating box, and the like.
- Fig. 8 is an exploded perspective view showing the partition member, the platform member, a seat, and left and right control lever devices.
- Fig. 9 is a perspective view viewing a single cab from a lower side.
- Fig. 10 is a perspective view showing the accommodating box in a state where a lid body is closed.
- Fig. 11 is a perspective view showing the accommodating box in a state where the lid body is opened.
- Fig. 12 is a perspective view showing a state where a document is accommodated in a document accommodating part of the accommodating box.
- Fig. 13 is a perspective view showing the seat and the accommodating box.
- Fig. 14 is a required part enlarged view in Fig. 4 showing the seat, the accommodating box, and the like in a state where the lid body of the accommodating box is opened.
- Fig. 15 is a perspective view showing a state where a backrest of the seat is inclined to a front side, and the lid body of the accommodating box is opened.
- Fig. 16 is a required part enlarged view of a similar position to Fig. 14, showing a state where the backrest of the seat is inclined to the front side, and the lid body of the accommodating box is opened.
- Fig. 17 is a cross sectional view of a similar position to Fig. 14, showing a modified example of the rear mounting member.

### MODE FOR CARRYING OUT THE INVENTION

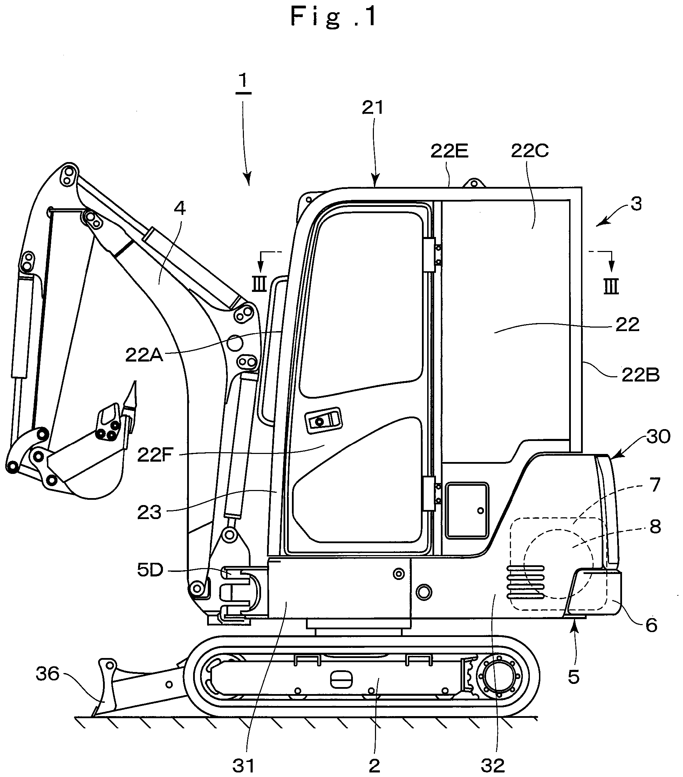

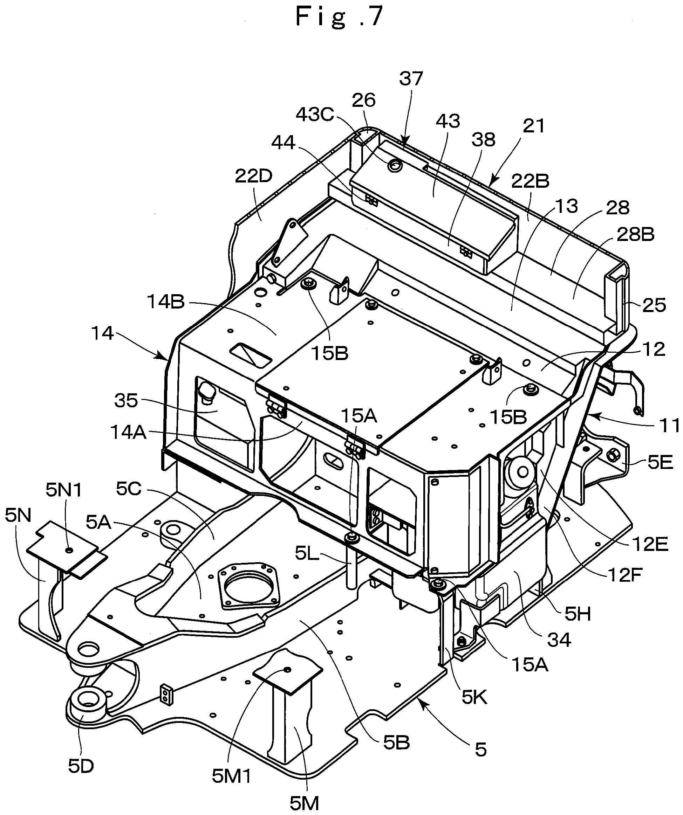

Hereinafter, a small-sized hydraulic excavator according to the embodiments of the present invention will be in detail explained referring to Fig. 1 to Fig. 17.

In Fig. 1, a small-sized hydraulic excavator 1 is configured as a mini excavator of a cab type including a cab 21 described later. The small-sized hydraulic excavator 1 is composed of: a self-propelled lower traveling structure 2; an upper revolving structure 3 rotatably equipped on the lower traveling structure 2; and a front device 4 that is tiltably provided in a front side of a front and rear direction of the upper revolving structure 3, and performs earth and sand excavation work, or the like. In this case, the front device 4 is a swing type suitably used for a side groove excavation work. A base end side of the front device 4 is supported in a manner of being able to swing in a left and right direction by a support bracket 5D of a revolving frame 5 described later.

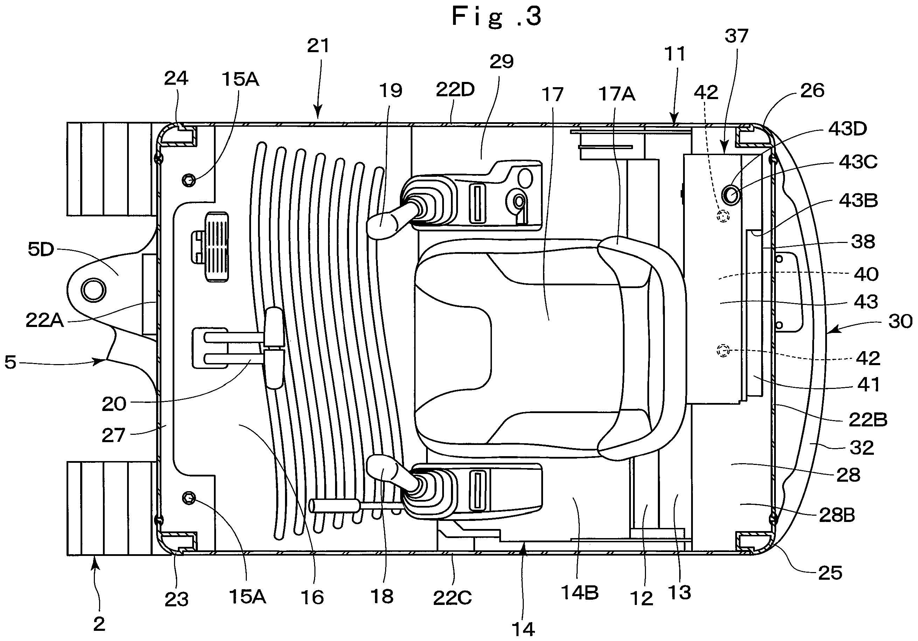

Here, the small-sized hydraulic excavator 1 is used for a dismantling work of an inside of a building and an excavation work in a small place such as a street. Thus, for example, a machine weight of the small-sized hydraulic excavator 1 is within about 0.7 to 8 tons. Among mini excavators, an ultra small-sized hydraulic excavator of a cab type having the mechanical weight of 2 tons or smaller is exemplified as the hydraulic excavator 1 according to the present embodiments. As a structural characteristic of the ultra small-sized hydraulic excavator 1, the width dimensions of left and right directions of the lower traveling structure 2, the upper revolving structure 3, and the cab 21 are set to be almost the same dimensions (see Fig. 3).

Therefore, the ultra small-sized hydraulic excavator 1 has a structure in which space for arrangement of various pieces of on-board equipment on the revolving frame 5 is small, and a seat 17 is arranged in an upper side of a fuel tank 34 and a hydraulic oil tank 35 that are described later. With this structure, the revolving frame 5 is formed long in a front and rear direction, and thereby, the upper revolving structure 3 can secure habitation space of an operator, and the cab 21 can be equipped on the revolving frame 5.

As shown in Fig. 1 to Fig. 7, the upper revolving structure 3 is configured so as to include the revolving frame 5 described later, a counterweight 6, an engine 7, a hydraulic pump 8, a support member 9, a partition member 11, a platform member 14, a footrest member 16, the cab 21, an exterior cover 30, an accommodating box 37, and the like.

The revolving frame 5 is rotatably provided on the lower traveling structure 2, and the revolving frame 5 composes a support structure of the upper revolving structure 3. Here, the revolving frame 5 is configured so as to include: a rectangular bottom plate 5A that is formed of a thick steel plate, or the like, and extends in a front and rear direction; and a left vertical plate 5B and a right vertical plate 5C that are erected so as to extend in the front and rear direction on said bottom plate 5A.

A support bracket 5D is provided in a front end portion of the left and right vertical plates 5B, 5C. The front device 4 is supported by the support bracket 5D in a left and right direction in a manner of being able to swing. A left rear bracket 5E is provided in a rear end portion of the left vertical plate 5B. A left rear leg part 9C of the support member 9 described later is mounted to the left rear bracket 5E. On the other hand, a right rear bracket 5F is provided in a rear end portion of the right vertical plate 5C. A right rear leg part 9D of the support member 9 is mounted to the right rear bracket 5F. A horizontal plate 5G that extends in the left and right direction over an intermediate portion of the front and rear direction of the left vertical plate 5B, is erected in an intermediate portion of the front and rear direction of the bottom plate 5A. The horizontal plate 5G extends from the right vertical plate 5C over the left vertical plate 5B to the left end portion of the bottom plate 5A.

A left end portion of the horizontal plate 5G serves as a left front bracket 5H. A left front leg part 9A of the support member 9 is mounted to the left front bracket 5H. A right front bracket 5J that erects upward from the bottom plate 5A is provided in a right end portion that is positioned in an extension line of the horizontal plate 5G in the bottom plate 5A. A right front let part 9B of the support member 9 is mounted to the right front bracket 5J.

A left platform support member 5K is provided in an intermediate portion of the front and rear direction in the left end portion of the bottom plate 5A. The left platform support member 5K is formed of a plate body bent in a reversed J shape, and extends upward from the bottom plate 5A. A right platform support member 5L formed of a rod shape body extending in the up and down direction is provided in a portion facing to the left platform support member 5K in the left and right direction, in an outer surface of the left vertical plate 5B. The left platform support member 5K and the right platform support member 5L are configured to support a front side of the platform member 14 described later.

Further, a left front cab support member 5M having a female screw hole 5M1 on an upper surface thereof is erected in a corner portion of a left front side of the bottom plate 5A. An elastic member (not shown) is screwed into the female screw hole 5M1 of the left front cab support member 5M. The left front cab support member 5M elastically supports a left front side of the cab 21 described later, via the elastic member.

On the other hand, a right front cab support member 5N having a female screw hole 5N1 on an upper surface of the right front cab support member 5N is erected in a corner portion of a right front side of the bottom plate 5A. An elastic member (not shown) is screwed into the female screw hole 5N1 of the right front cab support member 5N. The right front cab support member 5N elastically supports a right front side of the cab 21 via the elastic member.

The revolving frame 5 configured in this way has a length dimension in the front and rear direction (the entire length dimension) set to be larger than that of the lower traveling structure 2. Thereby, the cab 21 described later can be mounted on the revolving frame 5 while habitation space of an operator can be secured.

The counterweight 6 is mounted to a rear side of the revolving frame 5. The counterweight 6 balances weights with the front device 4, and is a weight molded by, for example, using casting. Here, the revolving frame 5 is formed long in the front and rear direction, and thereby, the counterweight 6 can be arranged in a position apart from a revolving center. Thereby, while maintaining weight balance with the front device 4, the counterweight 6 can hold the height dimension of the counterweight 6 to be low.

The engine 7 as a prime mover is arranged in a prime mover room 33 described later. The engine 7 drives the hydraulic pump 8, and is equipped in a horizontally-placed state of being positioned in a front side of the counterweight 6, and extending in the left and right direction in a rear side of the revolving frame 5.

The hydraulic pump 8 is provided in a left side of the left and right direction of the engine 7. A cooling fan (not shown) is provided in a right side of the engine 7. The hydraulic pump 8 is driven by the engine 7 to feed hydraulic oil to a hydraulic actuator provided in the lower traveling structure 2, the front device 4, or the like. A heat exchanger (not shown) for cooling engine cooling water, hydraulic oil, and the like is provided in a position facing to the cooling fan. It is to be noted that, as the prime mover, a prime mover of a hybrid system in which an electric motor for assisting is provided in an engine, can be used. Otherwise, only the electric motor can be used as the prime mover.

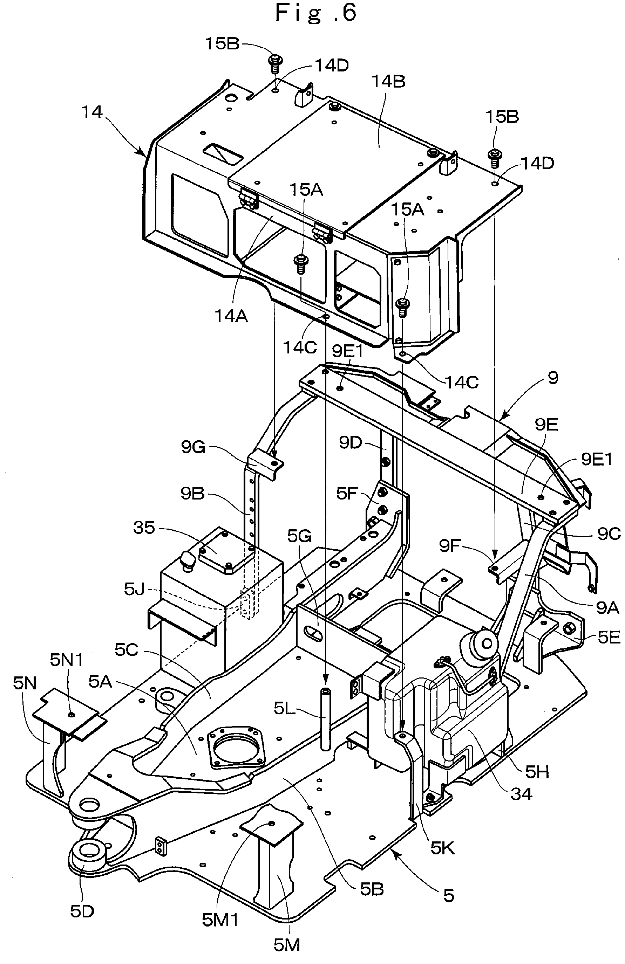

The support member 9 is provided on the revolving frame 5 so as to extend over the engine 7. The partition member 11 described later, the platform member 14, a rear side of the cab 21, and the like are mounted to the support member 9. Here, as shown in Fig. 6, the support member 9 is configured so as to include the left front leg part 9A, the right front leg part 9B, the left rear leg part 9C, the right rear leg part 9D, and the support base 9E.

The left front leg part 9A positioned in a left end portion of the revolving frame 5 inclines and extends rearward toward an upper side. A lower end of the left front leg part 9A is fixed to the left front bracket 5H of the revolving frame 5 by using a bolt. The right front leg part 9B positioned in a right end portion of the revolving frame 5 inclines and extends rearward toward an upper side. A lower end of the right front leg part 9B is fixed to the right front bracket 5J of the revolving frame 5 by using a bolt. On the other hand, a lower end of the left rear leg part 9C is fixed to the left rear bracket 5E of the revolving frame 5 by using a bolt. A lower end of the right rear leg part 9D is fixed to the right rear bracket 5F of the revolving frame 5 by using a bolt.

The support base 9E is fixed to upper ends of each of the leg parts 9A, 9B, 9C, and 9D. The support base 9E is formed as a strength member extending in the left and right direction. Here, two bolt through holes 9E1 positioned in both sides of the left and right direction are provided in the support base 9E. A lower side portion of an elastic support body 10 described later is fixed to the bolt through holes 9E1 by using a bolt. Thereby, the support base 9E supports a rear side of the cab 21 via the elastic support body 10.

A left support member 9F formed of an angle material, or the like projects forward in an upper side of the left front leg part 9A. A right support member 9G formed of an angle material, or the like projects leftward in an intermediate portion of the up and down direction of the right front leg part 9B. The partition member 11 and the platform member 14 are mounted to the left and right support members 9F, 9G.

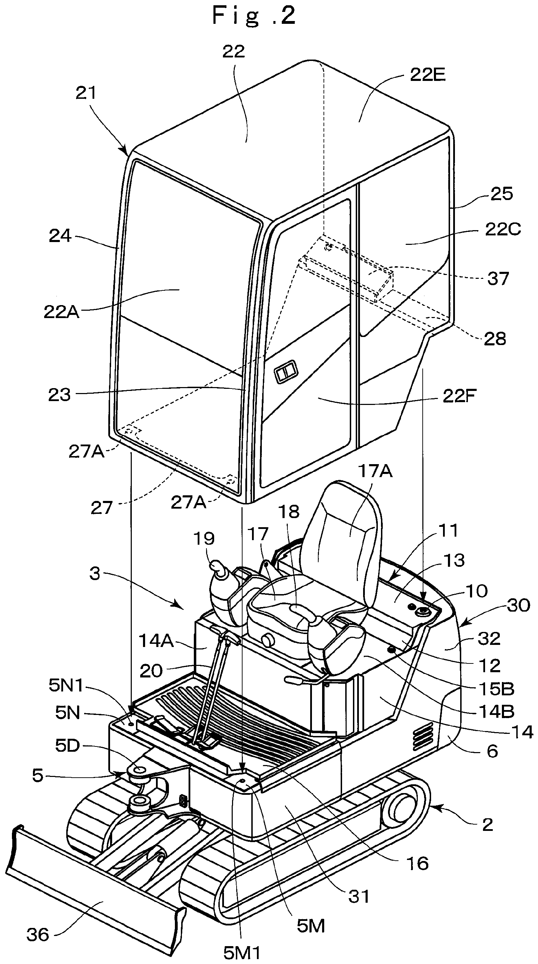

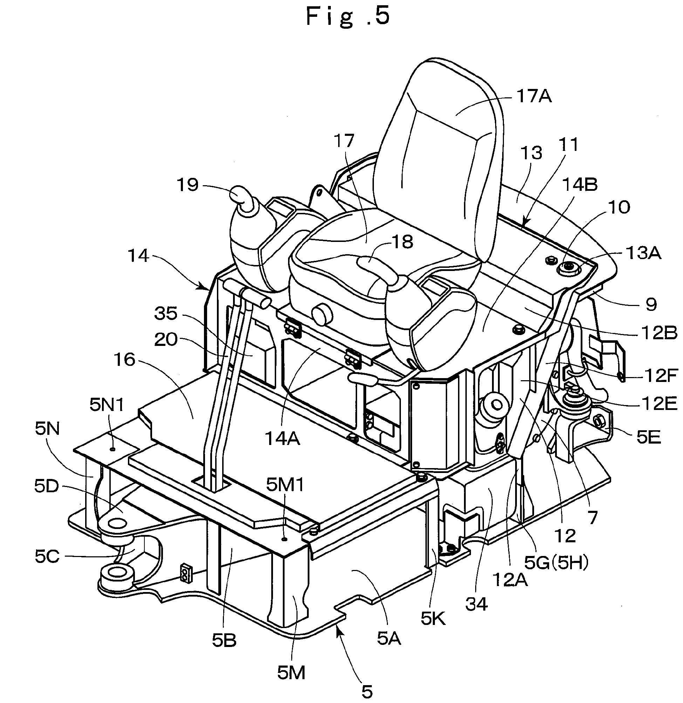

The elastic support bodies 10 are mounted to both the left and right sides of the support base 9E of the support member 9 (only left side is shown in Fig. 2 and Fig. 5). The elastic support body 10 has a cylindrical rubber material having elasticity as a main body, and has a structure capable of being fixed by a screw in upper and lower positions. Particularly, a lower side portion of the elastic support body 10 is fixed to the bolt through holes 9E1 of the support base 9E forming the support member 9 by using a bolt. An upper side portion of the elastic support body 10 is fixed to a bolt through holes 28A of a rear mounting member 28 described later that composes the cab 21, by using a bolt. Thereby, the elastic support body 10 can elastically support the rear side of the cab 21 on the support member 9.

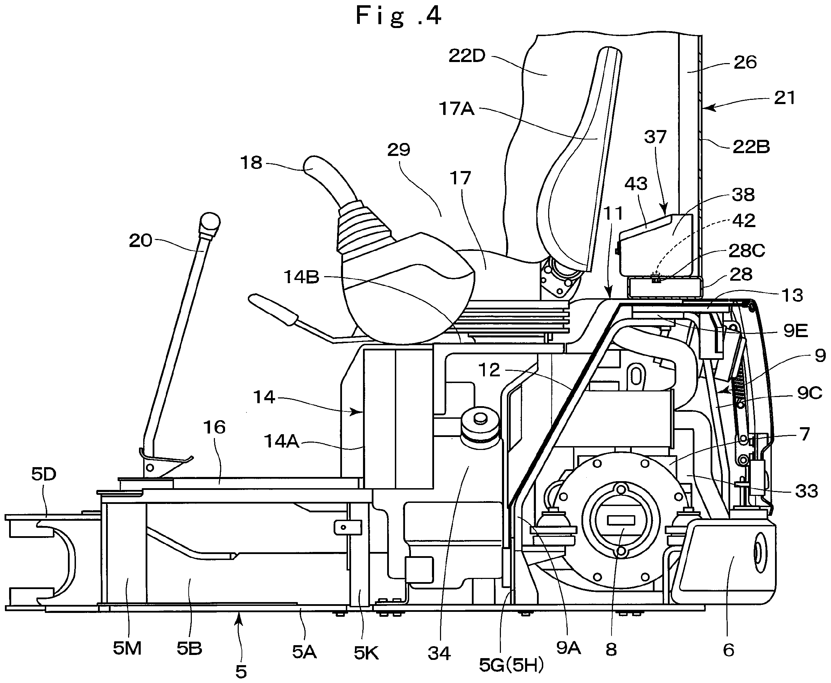

The partition member 11 is supported in between the revolving frame 5 and the support base 9E of the support member 9, and covers a front side and an upper side of the engine 7. As shown in Fig. 4, the partition member 11 partitions the prime mover room 33, and a front side (that is, an operating room 29 described later) of the prime mover room 33. That is, the partition member 11 is composed of a plate shape body including a front surface plate part 12 that covers the front side of the engine 7, and an upper surface plate part 13 that covers the upper side of the engine 7.

Here, the partition member 11 is formed so as to have the same width dimension as the entire width dimension of the revolving frame 5. Thereby, the partition member 11 partitions the prime mover room 33 and the operating room 29 described later, and thereby, heat and operation sound generated by the engine 7 can be blocked not to be transferred to the operating room 29 side. Moreover, a periphery of the partition member 11 is enclosed by an exterior cover 30 described later, and thereby, the prime mover room 33 can be sealed from the outside.

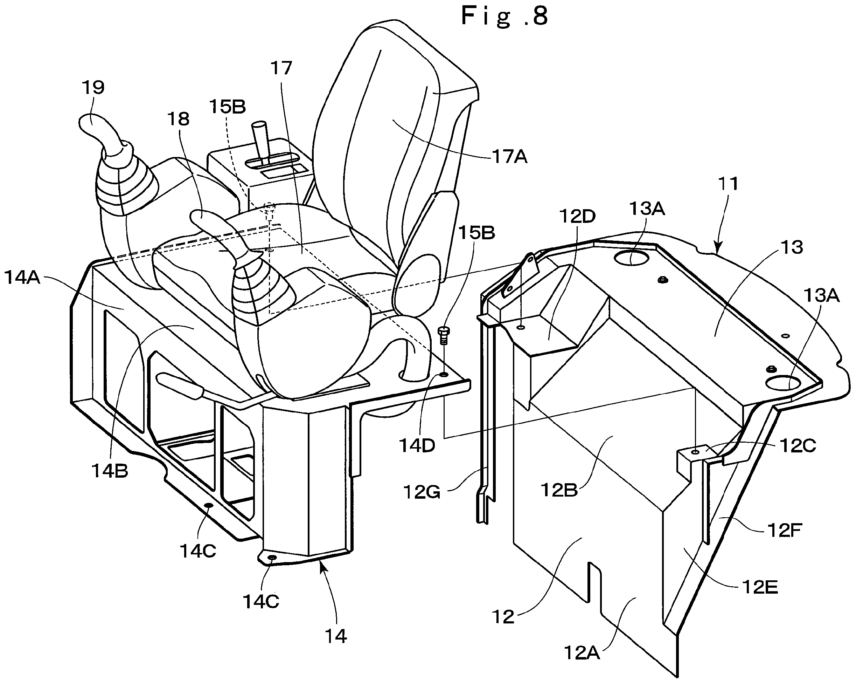

As shown in Fig. 8, the front surface plate part 12 of the partition member 11 is composed of a vertical plate 12A, an inclined plate 12B, a left support plate 12C, a right support plate 12D, a side surface plate 12E, a left end edge plate 12F, and a right end edge plate 12G. The vertical plate 12A extends from the horizontal plate 5G of the revolving frame 5 to the upper side. The inclined plate 12B extends from an upper end of the vertical plate 12A to a diagonally rear side. The left support plate 12C forms a small stepped shape arranged in a left side of the inclined plate 12B. The right support plate 12D forms a stepped shape that is arranged in a right side of the inclined plate 12B, and is larger than the left support plate 12C. The side surface plate 12E is formed over the vertical plate 12A and the inclined plate 12B. The left end edge plate 12F bends from a rear end edge of the side surface plate 12E to a left direction, and connects to a lower side portion of the vertical plate 12A. The right end edge plate 12G extends downward from the right end portion of the right support plate 12D. Thereby, the front surface plate part 12 covers the front side of the engine 7.

The upper surface plate part 13 of the partition member 11 is formed as a substantially quadrangle-shape horizontal plate body extending rearward from an upper end of the inclined plate 12B and the right support plate 12D of the front surface plate part 12. Thereby, the upper surface plate part 13 covers the upper side of the engine 7. A support body through holes 13A are provided in both the left and right sides of the upper surface plate part 13. The elastic support bodies 10 mounted to the support base 9E of the support member 9 are inserted to the support body through holes 13A.

A lower portion of the vertical plate 12A of the front surface plate part 12 of the partition member 11 is fixed to the horizontal plate 5G of the revolving frame 5, by using a bolt. The upper surface plate part 13 of the partition member 11 is fixed to the support base 9E of the revolving frame 5, by using a bolt. With this, the left support plate 12C of the front surface plate part 12 is placed on the left support member 9F of the support member 9, and is mounted to the left support member 9F, together with the platform member 14. In addition, the right support plate 12D of the front surface plate part 12 is placed on the right support member 9G of the support member 9, and is mounted to the right support member 9G, together with the platform member 14.

The platform member 14 is provided in between the revolving frame 5 and the front surface plate part 12 of the partition member 11 so as to be positioned in a front side of the partition member 11. The seat 17 described later is mounted on the platform member 14. The platform member 14 has a space portion for accommodating the fuel tank 34 described later and the hydraulic oil tank 35, in the lower side of the platform member 14. Thereby, even in the ultra small-sized hydraulic excavator 1, two tanks 34, 35 can be arranged in a small space under the platform member 14. Thereby, large habitation space can be provided to an operator.

As shown in Fig. 6 to Fig. 8, the platform member 14 is configured so as to include a front surface plate 14A mounted to the revolving frame 5, and extending in the left and right direction, and a planar seat mounting plate 14B extending from an upper portion of the front surface plate 14A to a rear side. Two front side bolt through holes 14C are provided with space from each other in the left and right direction, in a lower side of the front surface plate 14A. Two rear side bolt through holes 14D are provided so as to be positioned in left and right corner portions, in a rear portion of the seat mounting plate 14B.

The platform member 14 is arranged side by side in the front side of the partition member 11. The lower side of the front surface plate 14A is placed on the left and right platform support members 5K, 5L of the revolving frame 5. On the other hand, a rear side of the seat mounting plate 14B is placed on the left support member 9F and the right support member 9G of the support member 9, via the left support plate 12C and the right support plate 12D of the front surface plate part 12 composing the partition member 11.

Bolts 15A are inserted to each of the front side bolt through holes 14C of the front surface plate 14A. Each of the bolts 15A is screwed into the left platform support member 5K and the right platform support member 5L of the revolving frame 5. Thereby, a lower side of the front surface plate 14A is mounted to the revolving frame 5. On the other hand, bolts 15B are inserted to each of the rear side bolt through holes 14D of the seat mounting plate 14B. Each of the bolts 15B is screwed into the left support member 9F and the right support member 9G of the support member 9, via the left support plate 12C and the right support plate 12D of the front surface plate part 12 composing the partition member 11. Thereby, a rear side of the seat mounting plate 14B is mounted to the support member 9, together with the partition member 11.

The footrest member 16 is provided in the revolving frame 5 so as to be positioned in the front side of the platform member 14. The footrest member 16 is space on which an operator seated on the seat 17 places his/her feet. The footrest member 16 forms a floor plate in the cab 21. Traveling control lever/pedal 20 described later, and the like are installed in a front side of the footrest member 16.

As shown in Fig. 4 and Fig. 5, the seat 17 is provided on the seat mounting plate 14B of the platform member 14. The seat 17 has a backrest 17A, and composes an operation seat on which the operator seats. A left working control lever 18 and a right working control lever 19 are provided in both the left and right sides of the seat 17. These working control levers 18, 19 are manually operated by the operator, to operate the front device 4, and the like. Furthermore, the traveling control lever/pedal 20 are provided in a front side position of the footrest member 16 that is forward from the seat 17. The traveling control lever/pedal 20 are manually operated or pedaling operated by the operator, to cause the lower traveling structure 2 to travel.

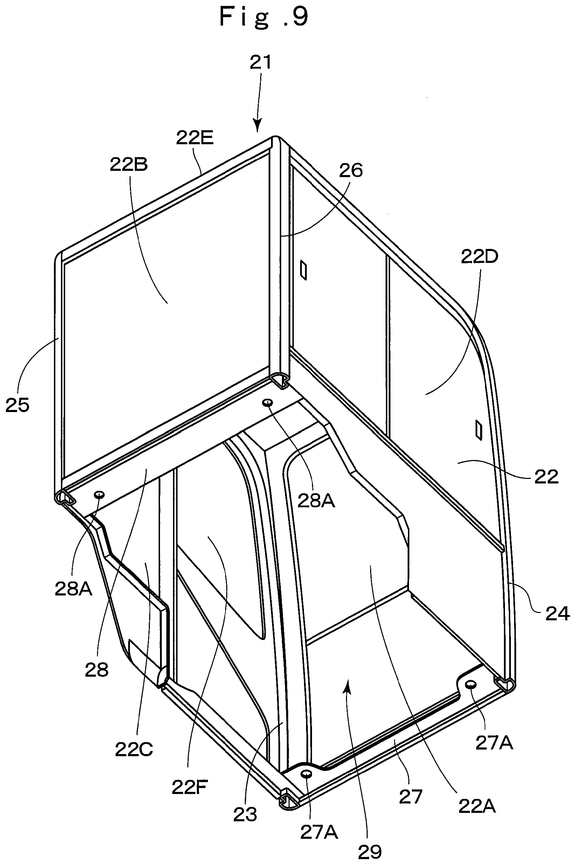

The cab 21 is provided in an upper side of the partition member 11, the platform member 14, and the footrest member 16, so as to cover the seat 17, and the like. As shown in Fig. 9, the cab 21 is configured so as to include a cab panel 22, a left front pillar 23, a right front pillar 24, a left rear pillar 25, a right rear pillar 26, a front mounting plate 27, and a rear mounting member 28. Here, the cab panel 22 is formed to be a box shape enclosed by a front surface 22A, a rear surface 22B, a left surface 22C, a right surface 22D, and a top surface 22E. A door 22F that is opened and closed when the operator gets on and off the cab 21, is provided in the left surface 22C.

The left front pillar 23 is provided in a left front corner portion where the front surface 22A and the left surface 22C of the cab panel 22 cross. The right front pillar 24 is provided in a right front corner portion where the front surface 22A and the right surface 22D of the cab panel 22 cross. Each of these left front pillar 23 and the right front pillar 24 is formed of a square cylindrical body having a closed cross-sectional space, and extends upward from the revolving frame 5. A front mounting plate 27 extending in the left and right direction is integrally provided in lower portions of the left front pillar 23 and the right front pillar 24. The lower portions of the left and right front pillars 23, 24 are connected by the front mounting plate 27.

Bolt through holes 27A are provided in both the left and right sides of the front mounting plate 27. The bolt through holes 27A correspond to the female screw hole 5M1 of the left front cab support member 5M, and the female screw hole 5N1 of the right front cab support member 5N composing the revolving frame 5, respectively. The bolts (not shown) inserted to each of the bolt through holes 27A are screwed into the female screw holes 5M1, 5N1 of the front cab support members 5M, 5N, via elastic members (not shown) . Thereby, the front mounting plate 27 of the cab 21 is elastically supported to a front portion of the revolving frame 5.

The left rear pillar 25 is provided in a left rear corner portion where the rear surface 22B and the left surface 22C of the cab panel 22 cross. The right rear pillar 26 is provided in a right rear corner portion where the rear surface 22B and the right surface 22D of the cab panel 22 cross. Each of these left rear pillar 25 and the right rear pillar 26 is formed of a square cylindrical body having a closed cross-sectional space, and extends upward from the support base 9E of the support member 9. The lower portion of the left rear pillar 25 and the lower portion of the right rear pillar 26 are connected by the rear mounting member 28.

The rear mounting member 28 is provided in a rear end lower side of the cab 21, and extends in the left and right direction. The rear mounting member 28 is formed by using a frame body (square cylindrical body) forming a rectangular closed cross-sectional space. A left end portion of the rear mounting member 28 is fixed to a lower portion of the left rear pillar 25, and a right end portion of the rear mounting member 28 is fixed to a lower portion of the right rear pillar 26. Thereby, the lower portions of the left and right rear pillars 25, 26 are connected by the rear mounting member 28 that is a strength member. The bolt through holes 28A are provided in both the left and right sides of the front mounting plate 27, each of the bolt through holes 28A corresponds to each of the bolt through holes 9E1 of the support base 9E composing the support member 9. The bolts (not shown) inserted to each of the bolt through holes 28A are screwed into an upper side portions of the elastic support body 10 mounted to the support base 9E of the support member 9. Thereby, the rear mounting member 28 of the cab 21 is elastically supported to the support member 9.

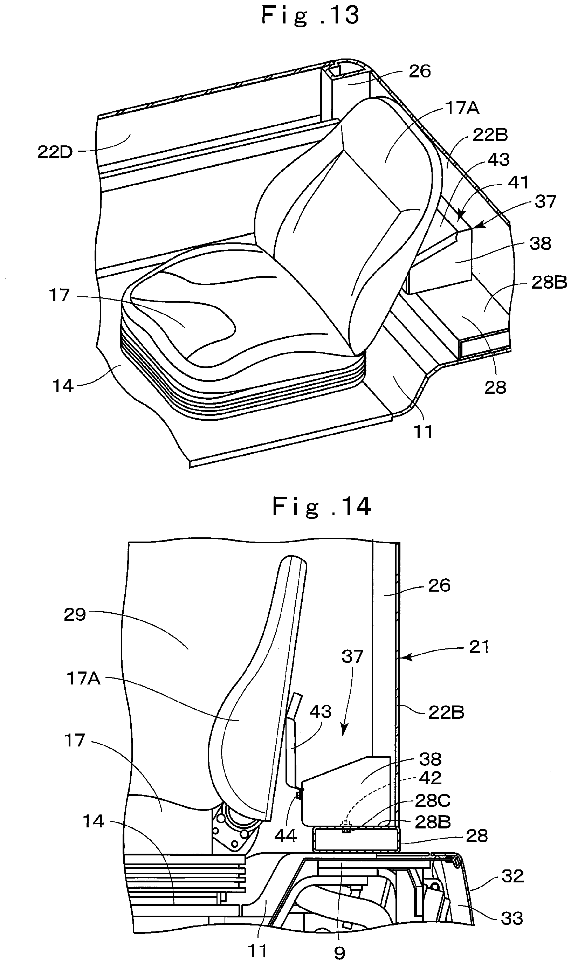

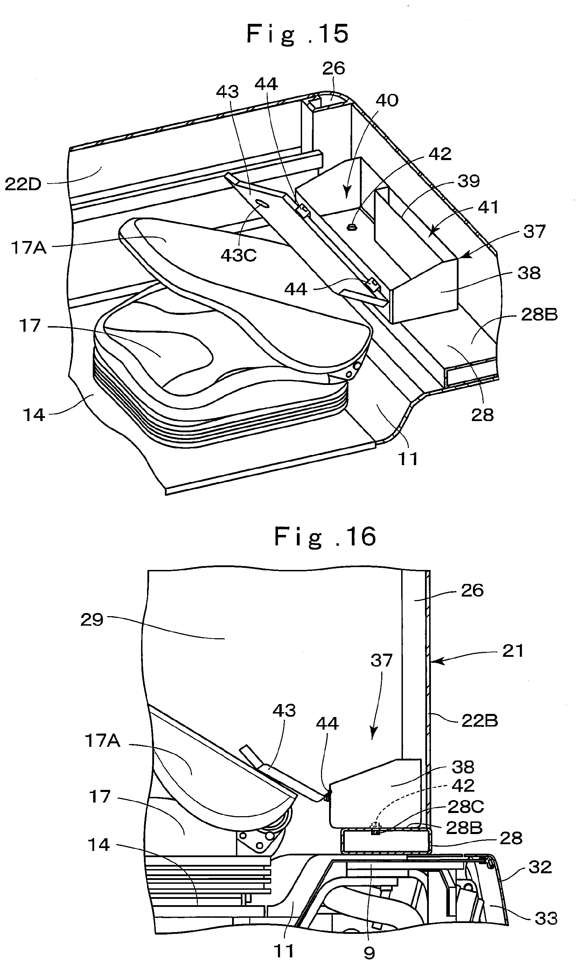

The accommodating box 37 described later is mounted to a top surface 28B of the rear mounting member 28 positioned in the cab 21. As shown in Fig. 14 and Fig. 16, two welding nuts 28C are fixed (only one is shown in the drawings) so as to be spaced from each other in the left and right direction, in a rear surface side of the top surface 28B of the rear mounting member 28.

Here, since the revolving frame 5 is formed long in the front and rear direction, the cab 21 mounted on the revolving frame 5 also can be formed long in the front and rear direction. Thereby, even in the ultra small-sized hydraulic excavator 1, the cab 21 having enough habitation space can be installed on the upper revolving structure 3. Moreover, the width dimension of the cab 21 is set to be almost the same dimension as the width dimension of the revolving frame 5. Accordingly, the maximum width dimension of the cab 21 can be achieved with respect to limited installation space on the revolving frame 5. Even by this feature, the habitation space can be large. The habitation space in the cab 21 serves as the operating room 29, and the operator gets onto the operating room 29.

The exterior cover 30 is arranged so as to enclose the revolving frame 5. The exterior cover 30 is composed of a plurality pieces of plate body erected from a peripheral edge of the bottom plate 5A of the revolving frame 5. The exterior cover 30 is composed of a front cover part 31, and an engine cover part 32. The front cover part 31 covers the periphery of the footrest member 16 that is a front lower side portion of the cab 21. The engine cover part 32 covers a left side, a right side, and a rear side of the prime mover room 33 described later that is a rear lower side portion of the cab 21.

The prime mover room 33 is enclosed by the bottom plate 5A of the revolving frame 5, the partition member 11, and the engine cover part 32 of the exterior cover 30. The prime mover room 33 accommodates the engine 7, the hydraulic pump 8, and the like, in the inside.

The fuel tank 34 is positioned in an intermediate portion of the front and rear direction of the revolving frame 5, and is mounted near a left side of the bottom plate 5A. The fuel tank 34 stores fuel fed to the engine 7. The hydraulic oil tank 35 is mounted near a right side of the bottom plate 5A that is in an opposite side from the fuel tank 34 in the left and right direction. The hydraulic oil tank 35 stores hydraulic oil fed to the hydraulic pump 8.

Here, the fuel tank 34 and the hydraulic oil tank 35 are accommodated in a lower side of the platform member 14. There is no need to install the cab 21 in a place other than that of the tanks 34, 35, in a configuration in which the tanks 34, 35 are accommodated in the lower side of the platform member 14. Thus, the cab 21 can be formed over the entire width of the revolving frame 5. Accordingly, the operating room 29 and the prime mover room 33 can be partitioned only by the partition member 11. Thereby, heat of the prime mover room 33 and operation sound of the engine 7 can be prevented from being transferred to the operator in the operating room 29.

A soil removing plate 36 extends in the left and right direction in a front side of the lower traveling structure 2, and is provided rotatably in the up and down direction. For example, the soil removing plate 36 performs earth and sand removing, soil removing work of leveling of ground, or the like, and snow removing.

Next, the accommodating box used in the present embodiment will be described.

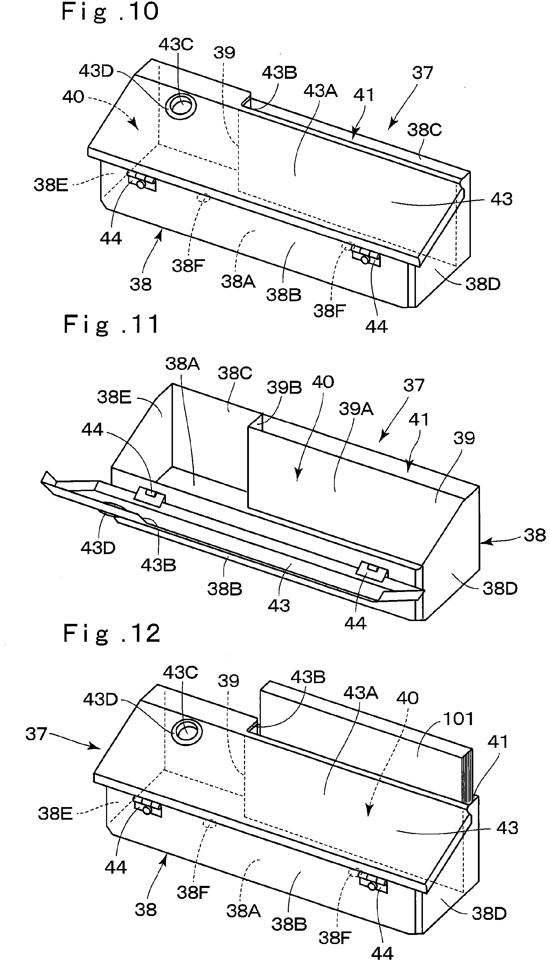

The accommodating box 37 is provided in the rear mounting member 28 of the cab 21 so as to be positioned in a rear side of the seat 17. The accommodating box 37 extends in the left and right direction along the rear mounting member 28 in the cab 21, and accommodates equipment such as tools and documents in the inside. As shown in Fig. 10 to Fig. 16, the accommodating box 37 is composed of a box main body 38 extending in the left and right direction along the rear mounting member 28 of the cab 21, and a lid body 43 described later, that covers an upper side of the box main body 38.

The box main body 38 of the accommodating box 37 is formed by being enclosed by the rectangular bottom surface plate 38A, the front surface plate 38B, the rear surface plate 38C, the left surface plate 38D, and the right surface plate 38E. The bottom surface plate 38A extends in the left and right direction on the top surface 28B of the rear mounting member 28. The front surface plate 38B erects upward from the front-end side of the bottom surface plate 38A. The rear surface plate 38C erects upward from the rear end side of the bottom surface plate 38A, and faces to the front surface plate 38B in the front and rear direction. The left surface plate 38D erects upward from the left end side of the bottom surface plate 38A. The right surface plate 38E erects upward from a right end side of the bottom surface plate 38A, and faces to the left surface plate 38D in the left and right direction. Thereby, the box main body 38 is configured to be a bottomed box body having an upper side being an opening end.

Here, a height dimension of the rear surface plate 38C from the rear mounting member 28 (top surface 28B) is set to be larger than a height dimension of the front surface plate 38B from the rear mounting member 28 (top surface 28B). Thereby, upper ends of the left surface plate 38D and the right surface plate 38E incline gradually downward from the rear surface plate 38C side to the front surface plate 38B side. Two bolt through holes 38F penetrating in the up and down direction are formed with an interval in the left and right direction, in the bottom surface plate 38A of the box main body 38.

A partition plate 39 is adhered to a left side of the rear surface plate 38C by means of welding, or the like. The partition plate 39 has: a flat plate part 39A facing to the rear surface plate 38C in the front and rear direction, and extending in the left and right direction; and a bent plate part 39B bent from a right end side of the flat plate part 39A to the rear side. A left end portion of the flat plate part 39A is adhered to the left surface plate 38D. A rear end part of the bent plate part 39B is adhered to the rear surface plate 38C. Thereby, the inside of the box main body 38 is partitioned into a tool accommodating part 40 formed in between the partition plate 39 and the front surface plate 38B, and a document accommodating part 41 formed in between the partition plate 39 and the rear surface plate 38C.

In this case, the document accommodating part 41 arranged in a rear left side of the box main body 38 forms rectangular accommodation space that is small in the front and rear direction and large in the left and right direction. Thereby, the document accommodating part 41 can accommodate, for example, a document 101 such as an instruction manual for the hydraulic excavator 1 in a standing state (see Fig. 12). On the other hand, the tool accommodating part 40 forms wide accommodation space in the box main body 38 excluding the document accommodating part 41, and can accommodate, for example, a wrench, a grease gun, and the like.

The box main body 38 is mounted to the rear mounting member 28 of the cab 21 by using two bolts 42. That is, the bolts 42 are inserted from upward to the bolt through holes 38F, respectively, provided in the bottom surface plate 38A of the box main body 38, and are screwed into the welding nuts 28C provided in a rear surface side of the rear mounting member 28. Thereby, as shown in Fig. 3, the accommodating box 37 is arranged in a rear side of the seat 17 in a state of being close to the right surface 22D side of the cab 21, and is mounted to the rear mounting member 28 of the cab 21 in a state of extending in the left and right direction along the rear surface 22B of the cab 21.

The lid body 43 is arranged in an upper side of the box main body 38, and covers the upper side of the box main body 38 in a manner of being able to open and close. The lid body 43 is formed as a rectangular plate body that is slightly larger than an opening end of the box main body 38, and has an inclined surface 43A that inclines gradually downward from the rear side to the front side.

Here, a rectangular notch part 43B corresponding to a shape of the document accommodating part 41 is formed in a portion (rear left side) of the lid body 43 corresponding to the document accommodating part 41. Thereby, as shown in Fig. 12, when the lid body 43 is closed and covers the opening end of the box main body 38, only an upper end of the tool accommodating part 40 is blocked, and an upper end of the document accommodating part 41 is kept opened. A pick up hole 43C for hooking a finger of the operator, or the like, is provided in the right side of the lid body 43 so as to penetrate in the up and down direction. A hemming part 43D formed of a rubber, or the like is arranged in a periphery of the pick up hole 43C.

Two hinge mechanisms 44 are provided in between the front surface plate 38B of the box main body 38, and the front end portion of the lid body 43 so as to be spaced from each other in the left and right direction. Each of the hinge mechanisms 44 supports the lid body 43 with respect to the box main body 38, in a manner of being able to open and close in the front and rear direction. That is, the lid body 43 is a front opening type rotating in the front and rear direction about each of the hinge mechanisms 44. The tool accommodating part 40 of the box main body 38 is opened when the lid body 43 rotates in the front side. On the other hand, the tool accommodating part 40 of the box main body 38 is blocked when the lid body 43 rotates in the rear side to abut with the upper end of the box main body 38.

In this case, since the notch part 43B is provided in the lid body 43, the upper end of the document accommodating part 41 can always be kept opened irrespective of opening and closing operation of the lid body 43. It is to be noted that the lid body 43 is operated to be opened and closed when the operator seated on the seat 17 turns around and hooks his/her finger, or the like, on the pick up hole 43C provided in the lid body 43.

The small-sized hydraulic excavator 1 according to the present embodiment has the configuration as described above. Operation of this hydraulic excavator 1 will be described in below.

First, the ultra small-sized hydraulic excavator 1 is transported to a work site in a state of loaded in a bed of a truck. Once the hydraulic excavator 1 is transported to the work site, the operator gets on the cab 21 and seats on the seat 17. When the traveling control lever/pedal 20 is operated in this state, the lower traveling structure 2 can be driven to cause the hydraulic excavator 1 to advance forward or rearward. On the other hand, the operator seated on the seat 17 operates the left and right working control levers 18, 19 to operate the front device 4, and the like, to perform dismantling work of in an inside of a building, side groove excavation work in a narrow street, or the like.

Here, in the small-sized hydraulic excavator 1 according to the present embodiment, the cab 21 is formed large in order to increase habitability of the inside of the operating room 29, and an upper side of the revolving frame 5 is covered almost entirely by the cab 21. Thereby, space in which the accommodating box 37 is arranged cannot be secured in between the upside of the revolving frame 5 and the cab 21.

On the other hand, in the hydraulic excavator 1, the accommodating box 37 is mounted to the top surface 28B of the rear mounting member 28 composing the cab 21. Thereby, space of the rear side of the seat 17 being dead space in the cab 21 (in the operating room 29) is effectively utilized, and the accommodating box 37 can be arranged. Therefore, working space and working visibility of the operator in the cab 21 do not become small due to the accommodating box 37, and the working space and working visibility of the operator can be properly maintained. Moreover, by being directly mounted to the rear mounting member 28 serving as the strength member of the cab 21, the accommodating box 37 can accommodate equipment having large weight, in the inside.

Here, the accommodating box 37 is composed of: the box main body 38 positioned in the cab 21, and extending in the left and right direction along the rear mounting member 28; and the lid body 43 covering the box main body 38 from the upper side.

Thereby, the accommodating box 37, and equipment such as tools and documents accommodated in the accommodating box 37 can be prevented from being exposed to rainwater, or the like. Accordingly, the accommodating box 37 and equipment can be maintained to be clean. Further, there is no need to provide an anti-theft key in the accommodating box 37 itself, by locking the door 22F of the cab 21. For this, cost can be decreased. Further, the operator seated on the seat 17 can reach his/her hand to the accommodating box 37 only by turning around. Thus, the operator can easily take out, for example, equipment accommodated in the accommodating box 37.

The accommodating box 37 is composed of: the box main body 38 partitioned into the tool accommodating part 40 that accommodates tools, and the document accommodating part 41 that accommodates documents; and the lid body 43 that has a notch part 43B that is a portion corresponding to the document accommodating part 41 of the box main body 38, and covers the tool accommodating part 40 in the box main body 38 from the upper side.

Thereby, the documents such as the instruction manual accommodated in the document accommodating part 41 of the box main body 38, and tools accommodated in the tool accommodating part 40 can be separately stored. Accordingly, a document can be prevented from contacting with soiled tools to be soiled, and the document can be stored in a clean state. Moreover, even when the lid body 43 is closed, the lid body 43 only covers the portion corresponding to the tool accommodating part 40, and does not cover the document accommodating part 41. Accordingly, a document can be stored in the accommodating box 37 in a state where the upper side of the document projects upward from the lid body 43 (a state where the document stands), and the document can be taken out quickly without opening and closing the lid body 43.

In addition, the hinge mechanisms 44 that support the lid body 43 in the front and rear direction in a manner of being able to open and close, are provided in between the front surface plate 38B of the box main body 38 composing the accommodating box 37, and a front end of the lid body 43.

Thereby, the lid body 43 can easily be opened by the operator seated on the seat 17 only by twisting his/her body rearward, hooking his/her finger, or the like, on the pick up hole 43C of the lid body 43, and pulling the pick up hole 43C forward. In this case, the hinge mechanisms 44 are provided in the front surface plate 38B of the box main body 38. Thus, the distance in which a hand of the operator extends when the lid body 43 is opened and closed, can be shortened than the distance in, for example, a case where the hinge mechanisms 44 are provided in the rear surface plate 38C. As a result, workability in opening and closing the lid body 43 can be increased.

Moreover, as shown in Fig.15 and Fig. 16, the lid body 43 can be opened widely forward with the hinge mechanisms 44 as the center, in a state where the backrest 17A of the seat 17 is inclined forward. Thereby, tools can be taken in and out with enough space with respect to the tool accommodating part 40, even when a large tool is accommodated in the tool accommodating part 40 of the accommodating box 37.

Further, in the box main body 38 of the accommodating box 37, height dimension in the up and down direction of the rear surface plate 38C is set to be larger than height dimension in the up and down direction of the front surface plate 38B. The lid body 43 forms the inclined surface 43A that inclines gradually downward from the rear surface plate 38C of the box main body 38 to the front surface plate 38B.

Thereby, the backrest 17A can be prevented from interfering with the accommodating box 37 even in a state where the backrest 17A of the seat 17 positioned in the front side of the accommodating box 37 is inclined rearward (reclining state), and angle adjustment of the backrest 17A can be performed in a wide range.

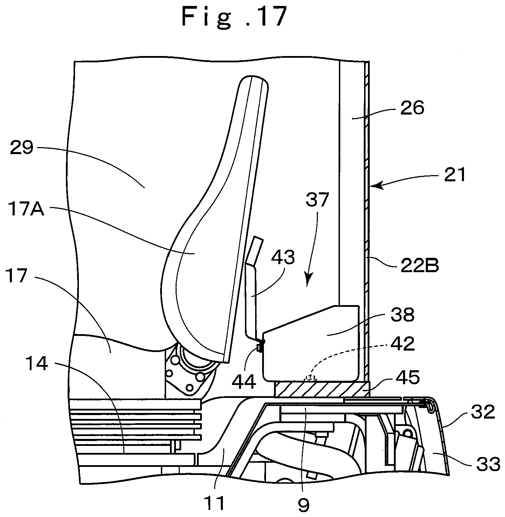

It is to be noted that, in the embodiments described above, a case is exemplified where the rear mounting member 28 coupling the lower part of the left rear pillar 25 of the cab 21 and the lower portion of the right rear pillar 26, is formed by the frame body forming a rectangular closed cross-sectional space. However, the present invention is not limited thereto. For example, as the modified example shown in Fig. 17, the rear mounting member may be configured to be formed by a planer rear mounting plate 45 extending in the left and right direction. In this case, one plate material may be used as the rear mounting plate 45.

### DESCRIPTION OF REFERENCE NUMERALS

- 1: Small-sized hydraulic excavator
- 2: Lower traveling structure
- 3: Upper revolving structure
- 4: Front device
- 5: Revolving frame
- 6: Counterweight
- 7: Engine (Prime mover)
- 8: Hydraulic pump
- 9: Support member
- 9A to 9D: Leg part
- 9E: Support base
- 11: Partition member
- 12: Front surface plate part
- 13: Upper surface plate part
- 14: Platform member
- 16: Footrest member
- 17: Seat
- 21: Cab
- 22: Cab panel
- 22A: Front surface
- 22B: Rear surface
- 22C: Left surface
- 22D: Right surface
- 22E: Top surface
- 23: Left front pillar
- 24: Right front pillar
- 25: Left rear pillar
- 26: Right rear pillar
- 28: Rear mounting member
- 29: Operating room
- 33: Prime mover room
- 37: Accommodating box
- 38: Box main body
- 38A: Bottom surface plate
- 38B: Front surface plate
- 38C: Rear surface plate
- 38D: Left surface plate
- 38E: Right surface plate
- 40: Tool accommodating part
- 41: Document accommodating part
- 43: Lid body
- 43B: Notch part
- 44: Hinge mechanism
- 45: Rear mounting plate (Rear mounting member)

## Claims

1. A small sized hydraulic excavator (1) comprising:
a lower traveling structure (2) that can self-propel;
an upper revolving structure (3) rotatably equipped on said lower traveling structure (2); and
a front device (4) tiltably provided in a front side of a front and rear direction of said upper revolving structure (3),
said upper revolving structure (3) comprising:
a revolving frame (5) composing a support structure;
a counterweight (6) mounted to a rear portion of said revolving frame (5) for balancing weights with said front device (4);
a prime mover (7) equipped in a horizontally-placed state of being positioned in a front side of said counterweight (6), and extending in a left and right direction in a rear side of said revolving frame (5), to drive a hydraulic pump (8);
a support member (9) formed of leg parts (9A, 9B, 9C, 9D) provided on said revolving frame (5) so as to extend over said prime mover (7), and a support base (9E) provided in upper ends of said leg parts (9A, 9B, 9C, 9D);
a partition member (11) formed of a plate shape body including a front surface plate part (12) that covers a front side of said prime mover (7) and an upper surface plate part (13) that covers an upper side of said prime mover (7), said front surface plate part (12) being mounted to said revolving frame (5), said upper surface plate part (13) being mounted to said support base (9E) of said support member (9), and said partition member (11) partitioning a prime mover room (33) in which said prime mover (7) is arranged and a front side of said prime mover room (33);
a platform member (14) that is positioned in a front side of said partition member (11), is provided in between said revolving frame (5) and said front surface plate part (12) of said partition member (11), and .is mounted with a seat (17);
a footrest member (16) that is positioned in a front side of said platform member (14), is provided in said revolving frame (5), and on which a foot of an operator is placed; and
a cab (21) of which a front end is supported to a front side of said revolving frame (5) and a rear end is supported to said support base (9E) of said support member (9), said cab (21) covering an upper side of said partition member (11), platform member (14), and footrest member (16) to define an operating room (29) being a habitation room of the operator in the inside of said cab (21), **characterized in that**:
a rear mounting member (28) mounted to the support base (9E) of said support member (9) is provided in a lower side of a rear end of said cab (21);
an accommodating box (37) that is positioned in a rear side of said seat (17) in said cab (21) and accommodates equipment is provided in said rear mounting member (28) of said cab (21); and
said accommodating box (37) is composed of:
a box main body (38) formed so as to extend in a left and right direction along said rear mounting member (28), and partitioned into a tool accommodating part (40) that accommodates tools and a document accommodating part (41) that accommodates documents; and
a lid body (43) that has a notch part (43B) that is a portion corresponding to said document accommodating part (41) of said box main body (38), and covers said tool accommodating part (40) of said box main body (38) from an upper side.

2. The small sized hydraulic excavator (1) according to claim 1, wherein
said box main body (38) is configured to have a bottom surface plate (38A), a front surface plate (38B), a rear surface plate (38C), a left surface plate (38D), and a right surface plate (38E); and
be provided with hinge mechanisms (44) that support said lid body (43) in a manner of being able to open and close in a front and rear direction, in between said front surface plate (38B) and said lid body (43) of said box main body (38).

3. The small sized hydraulic excavator (1) according to claim 2, wherein,
in said box main body (38), a height dimension in an up and down direction of said rear surface plate (38C) is set to be larger than a height dimension in the up and down direction of said front surface plate (38B), and
an inclined surface (43A) that inclines downward from said rear surface plate (38C) to said front surface plate (38B) of said box main body (38) is formed in said lid body (43).

4. The small sized hydraulic excavator (1) according to claim 1, wherein
said cab (21) has a cab panel (22) composed of a front surface (22A), a rear surface (22B), a left surface (22C), a right surface (22D), and a top surface (22E) ; a left front pillar (23) provided in a left front corner portion in which said front surface (22A) and said left surface (22C) cross; a right front pillar (24) provided in a right front corner portion in which said front surface (22A) and said right surface (22D) cross; a left rear pillar (25) provided in a left rear corner
portion in which said rear surface (22B) and said left surface (22C) cross; and a right rear pillar (26) provided in a right rear corner portion in which said rear surface (22B) and said right surface (22D) cross, and
said rear mounting member (28) is a strength member that connects a lower side of said left rear pillar (25) and a lower side of said right rear pillar (26).

## Patentansprüche

1. Hydraulischer Kleinbagger (1), umfassend:
einen unteren Fahraufbau (2), der selbst antreibbar ist;
einen oberen Drehaufbau (3), der drehbar an dem unteren Fahraufbau (2) vorgesehen ist; und
eine vordere Vorrichtung (4), die kippbar an einer Vorderseite einer vorderen und rückwärtigen Richtung des oberen Drehaufbaus (3) vorgesehen ist,
wobei der obere Drehaufbau (3) umfasst:
einen Drehrahmen (5), der aus einem Trägeraufbau besteht;
ein Gegengewicht (6), das an einem rückwärtigen Abschnitt des Drehrahmens (5) angebracht ist, um Gewichte mit der vorderen Vorrichtung (4) auszugleichen;
eine Antriebsmaschine (7), die in einem horizontal angeordneten Zustand zur Positionierung an einer Vorderseite des Gegengewichts (6) ausgebildet ist und sich in einer linken und rechten Richtung In einer Rückseite des Drehrahmens (5) erstreckt, um eine Hydraulikpumpe (8) anzutreiben;
ein Trägerelement (9), das aus Schenkelteilen (9A, 9B, 9C, 9D), die an dem Drehrahmen (5) so vorgesehen sind, dass sie sich über die Antriebsmaschine (7) erstrecken, und einer Trägerbasis (9E) gebildet ist, die an den oberen Enden der Schenkelteile (9A, 9B, 9C, 9D) vorgesehen ist;
ein Trennelement (11), das aus einem plattenförmigen Körper gebildet ist,
der ein vorderes Begrenzungsplattenteil (12), das eine Vorderseite der Antriebsmaschine (7) abdeckt, und ein oberes Begrenzungsplattenteil (13) umfasst, das eine obere Seite der Antriebsmaschine (7) abdeckt, wobei das vordere Begrenzungsplattenteil (12) an dem Drehrahmen (5) montiert ist, das obere Begrenzungsplattenteil (13) an der Trägerbasis (9E) des Trägerelements (9) montiert ist und das Trennelement (11) einen Antriebsmaschinenraum (33), in dem die Antriebsmaschine (7) angeordnet ist, und eine Vorderseite des Antriebsmaschinenraums (33) trennt;
ein Plattformelement (14), das in einer Vorderseite des Trennelements (11) positioniert ist, zwischen dem Drehrahmen (5) und dem vorderen Begrenzungsplattenteil (12) des Trennelements (11) vorgesehen ist und mit einem Sitz (17) montiert ist;
ein Fußstützenelement (16), das an einer Vorderseite des Plattformelements (14) positioniert ist, in dem Drehrahmen (5) vorgesehen ist und auf dem sich ein Fuß eines Bedieners befindet; und
eine Kabine (21), deren vorderes Ende an einer Vorderseite des Drehrahmens (5) abgestützt ist und deren rückwärtiges Ende an der Trägerbasis (9E) des Trägerelements (9) abgestützt ist, wobei die Kabine (21) eine obere Seite des Trennelements (11), des Plattformelements (14) und des Fußstützenelements (16) abdeckt, um einen Betriebsraum (29) zu definieren,
der ein Aufenthaltsraum des Bedieners im Inneren der Kabine (21) ist,
**dadurch gekennzeichnet, dass**:
ein rückwärtiges Befestigungselement (28), das an der Trägerbasis (9E) des Trägerelements (9) montiert ist, in einer unteren Seite eines rückwärtigen Endes der Kabine (21) vorgesehen ist;
ein Aufnahmekasten (37), der in einer rückwärtigen Seite des Sitzes (17) in der Kabine (21) positioniert ist und Ausrüstung aufnimmt, in dem rückwärtigen Befestigungselement (28) der Kabine (21) vorgesehen ist; und
der Aufnahmekasten (37) umfasst:
einen Kastenhauptkörper (38), der so ausgebildet ist, dass er sich in einer linken und rechten Richtung entlang des rückwärtigen Befestigungselements (28) erstreckt, und der in ein Werkzeugaufnahmeteil (40), das Werkzeuge aufnimmt, und ein Dokumentenaufnahmeteil (41), das Dokumente aufnimmt, unterteilt ist; und
einen Deckelkörper (43), der ein Kerbenteil (43B) aufweist, das ein Abschnitt ist, der dem Dokumentenaufnahmeteil (41) des Kastenhauptkörpers (38) entspricht, und der das Werkzeugaufnahmeteil (40) des Kastenhauptkörpers (38) von einer Oberseite her abdeckt.

2. Hydraulischer Kleinbagger (1) nach Anspruch 1, wobei
der Kastenhauptkörper (38) so konfiguriert ist, dass er eine untere Begrenzungsplatte (38A), eine vordere Begrenzungsplatte (38B), eine rückwärtige Begrenzungsplatte (38C), eine linke Begrenzungsplatte (38D) und eine rechte Begrenzungsplatte (38E) aufweist; und
mit Scharniermechanismen (44) versehen ist, die den Deckelkörper (43) in einer Weise tragen, dass er sich zwischen der vorderen Begrenzungsplatte (38B) und dem Deckelkörper (43) des Kastenhauptkörpers (38) in einer vorderen und rückwärtigen Richtung öffnen und schließen kann.

3. Hydraulischer Kleinbagger (1) nach Anspruch 2, wobei
in dem Kastenhauptkörper (38) eine Höhenabmessung in einer Aufwärts- und Abwärtsrichtung der rückwärtigen Begrenzungsplatte (38C) so eingestellt ist, dass sie größer als eine Höhenabmessung in der Aufwärts- und Abwärtsrichtung der vorderen Begrenzungsplatte (38B) ist, und
eine geneigte Fläche (43A), die sich von der rückwärtigen Begrenzungsplatte (38C) zu der vorderen Begrenzungsplatte (38B) des Kastenhauptkörpers (38) nach unten neigt, in dem Deckelkörper (43) ausgebildet ist.

4. Hydraulischer Kleinbagger (1) nach Anspruch 1, wobei
die Kabine (21) eine Kabinenplatte (22) aufweist, die umfasst: eine vordere Fläche (22A), eine rückwärtige Fläche (22B), eine linke Fläche (22C), eine rechte Fläche (22D) und eine obere Fläche (22E); eine linke vordere Säule (23), die in einem linken vorderen Eckabschnitt vorgesehen ist, in dem sich die vordere Fläche (22A) und die linke Fläche (22C) kreuzen; eine rechte vordere Säule (24), die in einem rechten vorderen Eckabschnitt vorgesehen ist, in dem sich die vordere Fläche (22A) und die rechte Fläche (22D) kreuzen; eine linke rückwärtige Säule (25), die in einem linken rückwärtigen Eckabschnitt vorgesehen ist, in dem sich die rückwärtige Fläche (22B) und die linke Fläche (22C) kreuzen; und
eine rechte rückwärtige Säule (26), die in einem rechten rückwärtigen Eckabschnitt vorgesehen ist, in dem sich die rückwärtige Fläche (22B) und die rechte Fläche (22D) kreuzen, und
das rückwärtige Befestigungselement (28) ein Festigkeitselement ist, das eine untere Seite der linken rückwärtigen Säule (25) und eine untere Seite der rechten rückwärtigen Säule (26) verbindet.

## Revendications

1. Excavateur hydraulique de petite taille (1) comprenant :
une structure de déplacement inférieure (2) qui est capable de s'auto-propulser ;
une structure rotative supérieure (3) équipée de manière rotative sur ladite structure de déplacement inférieure (2) ; et
un dispositif frontal (4) prévu de manière à pouvoir basculer dans un côté frontal, dans une direction avant/arrière de ladite structure rotative supérieure (3),
ladite structure rotative supérieure (3) comprenant :
un cadre rotatif (5) composant une structure de support ;
un contrepoids (6) monté sur une portion postérieure dudit cadre rotatif (5) pour équilibrer des poids avec ledit dispositif frontal (4) ;
un moteur premier (7) équipé dans un état placé horizontalement en étant positionné dans un côté frontal dudit contrepoids (6) et s'étendant dans une direction gauche/droite dans un côté postérieur dudit cadre rotatif (5), afin d'entraîner une pompe hydraulique (8) ;
un élément de support (9) formé de parties analogues à des pieds (9A, 9B, 9C, 9D) prévu sur ledit cadre rotatif (5) de manière à s'étendre au-dessus dudit moteur premier (7), et une base de support (9E) prévue dans des extrémités supérieures desdites parties analogues à des pieds (9A, 9B, 9C, 9D) ;
un élément de cloisonnement (11) formé d'un corps en forme de plaque incluant une partie de plaque en surface frontale (12) qui couvre un côté frontal dudit moteur premier (7) et d'une partie de plaque en surface supérieure (13) qui couvre un côté supérieur dudit moteur premier (7), ladite partie de plaque en surface frontale (12) étant montée sur ledit cadre rotatif (5), ladite partie de plaque en surface supérieure (13) étant montée sur ladite base de support (9E) dudit élément de support (9), et ledit élément de cloisonnement (11) cloisonnant une chambre de moteur premier (33) dans laquelle ledit moteur premier (7) est agencé et un côté frontal de ladite chambre de moteur premier (33) ;
un élément formant plate-forme (14) qui est positionné dans un côté frontal dudit élément de cloisonnement (11), est prévu entre ledit cadre rotatif (5) et ladite partie de plaque en surface frontale (12) dudit élément de cloisonnement (11), et est équipé d'un siège (17) ;
un élément formant repose-pied (16) qui est positionné dans un côté frontal dudit élément formant plate-forme (14), est prévue dans ledit cadre rotatif (5), et sur lequel est placé un pied d'un opérateur ; et
une cabine (21) dont une extrémité frontale est supportée sur un côté frontal dudit cadre rotatif (5) et dont une extrémité postérieure est supportée sur ladite base de support (9E) dudit élément de support (9), ladite cabine (21) couvrant un côté de support dudit élément de cloisonnement (11), l'élément formant plate-forme (14), et l'élément formant repose-pied (16) pour définir une chambre d'opérateur (29) qui est une chambre d'habitation de l'opérateur à l'intérieur de ladite cabine (21),
**caractérisé en ce que** :
un élément de montage postérieur (28) monté sur la base de support (9E) dudit élément de support (9) est prévu dans un côté inférieur d'une extrémité postérieure de ladite cabine (21) ;
une boîte de réception (37) qui est positionnée dans un côté postérieur dudit siège (17) dans ladite cabine (21) et qui reçoit des équipements est prévue dans ledit élément de montage postérieur (28) de ladite cabine (21) ; et
ladite boîte de réception (37) est composé :
d'un corps principal de boîte (38) formé de manière à s'étendre dans une direction gauche/droite le long dudit élément de montage postérieur (28), et cloisonné en une partie de réception d'outil (40) qui reçoit des outils et en une partie de réception de documents (41) qui reçoit des documents ; et
un corps formant couvercle (43) qui présente une partie en encoche (43B), qui est une portion correspondant à ladite partie de réception de documents (41) dudit corps principal de boîte (38), et qui couvre ladite partie de réception d'outil (40) dudit corps principal de boîte (38) depuis un côté supérieur.

2. Excavateur hydraulique de petite taille (1) selon la revendication 1, dans lequel
ledit corps principal de boîte (38) est configuré pour avoir une plaque en surface de fond (38A), une plaque en surface frontale (38B), une plaque en surface postérieure (38C), une plaque surface de gauche (38D), et une plaque en surface de droite (38E) ; et
est équipé de mécanismes formant charnière (44) qui supportent ledit corps formant couvercle (43) de manière à être capable de s'ouvrir et de se fermer dans une direction avant/arrière, entre ladite plaque en surface frontale (38B) et ledit corps formant couvercle (43) dudit corps principal de boîte (38).

3. Excavateur hydraulique de petite taille (1) selon la revendication 2, dans lequel
dans ledit corps principal de boîte (38), une dimension en hauteur dans une direction haut/bas de ladite plaque en surface postérieure (38C) est fixée pour être plus grande qu'une dimension en hauteur dans la direction haut/bas de ladite plaque en surface frontale (38B), et
une surface inclinée (43A) qui est inclinée vers le bas depuis ladite plaque en surface postérieure (38C) jusqu'à ladite plaque en surface frontale (38B) dudit corps principal de boîte (38) est formée dans ledit corps formant couvercle (48).

4. Excavateur hydraulique de petite taille (1) selon la revendication 1, dans lequel
ladite cabine (21) a un panneau de cabine (22) composée d'une surface frontale (22A), d'une surface postérieure (22B), d'une surface de gauche (22C), d'une surface de droite (22B), et d'une surface supérieure (22E) ; un pilier frontal gauche (23) prévu dans une portion de coin avant gauche dans laquelle ladite surface frontale (22A) et ladite surface de gauche (22C) se croisent ; un pilier frontal droit (24) prévu dans une portion de coin avant droit dans laquelle ladite surface frontale (22A) et ladite surface de droite (22B) se croisent, un pilier postérieur gauche (25) prévu dans une portion de coin arrière gauche dans laquelle ladite surface postérieure (22B) et ladite surface de gauche (22C) se croisent ; et un pilier postérieur droit (26) prévu dans une portion de coin arrière droit dans laquelle ladite surface postérieure (22B) et ladite surface de droite (22D) se croisent, et
ledit élément de montage postérieur (28) est un élément solide qui connecte un côté inférieur dudit pilier postérieur gauche (25) et un côté inférieur dudit pilier postérieur droit (26).
